# EUROPÄISCHE PATENTSCHRIFT

(11) **EP 3 850 561 B1**
(45) Veröffentlichungstag und Bekanntmachung des Hinweises auf die Patenterteilung: **29.04.2026**
(21) Anmeldenummer: 19755886.9
(22) Anmeldetag: 15.08.2019
(51) Int. Cl.: G06Q 10/08

(54) **VORRICHTUNG FÜR DIE ABWICKLUNG EINER REKLAMATION WENIGSTENS EINES GEGENSTANDS**
DEVICE FOR FILING A COMPLAINT AGAINST AT LEAST ONE OBJECT
DISPOSITIF POUR LE TRAITEMENT D'UNE RÉCLAMATION D'AU MOINS UN OBJET

(30) Priorität: 12.09.2018 DE 102018122291
(43) Veröffentlichungstag der Anmeldung: 21.07.2021
(73) Patentinhaber: Telegärtner Elektronik GmbH, 74564 Crailsheim (DE)
(72) Erfinder: KRUSKA, Dirk, 74564 Crailsheim (DE)
(74) Vertreter: Hafner & Kohl PartmbB
(86) Internationale Anmeldenummer: PCT/EP2019/071912
(87) Internationale Veröffentlichungsnummer: WO 2020/052900

(56) Entgegenhaltungen:
- US-A1- 2004 084 527
- US-A1- 2004 084 527

## Beschreibung

Die Erfindung betrifft eine Vorrichtung für die Abwicklung einer Reklamation wenigstens eines Gegenstands.

Für die Reklamation eines Gegenstands ist es üblicherweise erforderlich, dass der Benutzer den gekauften Gegenstand dorthin verbringt, wo der Gegenstand gekauft wurde. beispielsweise muss der Gegenstand dabei in die Geschäftsräume gebracht werden und an der Kasse durch Personal des Händlers identifiziert/registriert werden. Dem Benutzer/Kunden kann anschließend der gezahlte Kaufpreis ausbezahlt werden.

Problematisch dabei ist, dass der Benutzer die bereits gekaufte Ware bzw. den gekauften Gegenstand in die Geschäftsraume verbringen muss, sodass eine potentielle Vermischung bzw. Verwechslung mit dort zum Kauf angebotenen Gegenständen, insbesondere identischen Gegenständen, gegeben ist. Mit anderen Worten ist es weder dem Benutzer noch dem Personal dabei möglich, zu belegen, dass der von dem Benutzer in dem Geschäftsraum mitgeführte Gegenstand bereits gekauft und bezahlt ist und es sich dabei nicht um einen im Geschäftsraum zum Kauf angebotenen Gegenstand handelt. Es ist dem Benutzer sonach nicht möglich, zweifelsfrei darzulegen, dass der Gegenstand von außerhalb des Geschäftsraums in diesen zum Zwecke der Reklamation gebracht wurde.

Daneben ist es ebenso, wenn überhaupt, nur aufwendig für das Personal des Geschäftsbetriebs/Händlers möglich, zu überprüfen, ob ein von dem Benutzer zur Reklamation mitgebrachter Gegenstand tatsächlich von diesem zuvor gekauft wurde, oder ob es sich lediglich um einen Gegenstand aus dem Verkaufsraum handelt, der beispielsweise mit einem Kaufbeleg eines zuvor gekauften anderen Gegenstands fälschlicherweise reklamiert bzw. zurückgegeben werden soll. Im Rahmen dieser Anmeldung wird der Begriff "Reklamation" generell für das zurückgeben des zuvor gekauften Gegenstands verwendet, wobei der Begriff sowohl das Austauschen bzw. Ersetzen eines defekten Gegenstands sowie das Zurückgeben des Gegenstands ohne Rücksicht auf die Ursache betrifft.

Aus dem Dokument US 2004 084 527 A1 ist ein System für das Management eines Inventars einer unbeaufsichtigten Einrichtung bekannt, die sich entfernt von einem zentralen Lagerhaus befindet.

Der Erfindung liegt die Aufgabe zugrunde, die Abwicklung einer Reklamation zu verbessern, insbesondere eine Identifizierungsmöglichkeit für den Gegenstand bereitzustellen.

Die Aufgabe wird durch eine Vorrichtung mit den Merkmalen des unabhängigen Anspruchs 1 gelöst. Vorteilhafte Ausgestaltungen sind Gegenstand der abhängigen Ansprüche.

Wie zuvor beschrieben, wird durch die Erfindung eine Vorrichtung für die Abwicklung einer Reklamation wenigstens eines Gegenstands bereitgestellt. Die Erfindung beruht auf der Erkenntnis, dass die Vorrichtung eine zur Identifizierung eines von einem Benutzer bereitgestellten Gegenstands ausgebildete Identifizierungseinrichtung umfasst, wobei die Identifizierungseinrichtung dazu ausgebildet ist, eine den Gegenstand, insbesondere einen positiv identifizierten Gegenstand, betreffende Identifizierungsinformation zu erzeugen, wobei eine Belegeinrichtung dazu ausgebildet ist, in Abhängigkeit der Identifizierungsinformation eine Beleginformation zu erzeugen, die angibt, dass sich der wenigstens eine Gegenstand im Besitz des Benutzers befindet und von dem Benutzer zum Zwecke einer Reklamation zu der Vorrichtung gebracht wurde.

Demnach wird durch die Vorrichtung eine Identifizierungseinrichtung und eine Belegeinrichtung bereitgestellt, wobei der Gegenstand, der von dem Benutzer zum Zwecke der Reklamation zu der Vorrichtung gebracht wurde, durch die Identifizierungseinrichtung identifiziert werden kann. Dabei kann insbesondere sichergestellt werden, dass es sich bei dem Gegenstand, der reklamiert bzw. zurückgegeben werden soll, um den zuvor gekauften bzw. erworbenen Gegenstand handelt. Die Identifizierungseinrichtung erzeugt dabei eine den Gegenstand betreffende Identifizierungsinformation, die beispielsweise den positiv identifizierten Gegenstand beschreibt. Die Identifizierungsinformation kann den Gegenstand beispielsweise hinsichtlich seines Kaufdatums, des Typs des Gegenstands, zum Beispiel der zugeordneten Warengruppe, charakterisieren. Die Identifizierungseinrichtung kann zur Identifizierung des Gegenstands eine entsprechende Information des Gegenstands einlesen, den Gegenstand zum Beispiel scannen. Auf dem Gegenstand kann ferner ein Identifizierungsmerkmal angeordnet sein, unter anderem ein Barcode, ein QR-Code oder dergleichen.

Die Belegeinrichtung kann anschließend eine Beleginformation erzeugen, die angibt, dass sich der mindestens eine Gegenstand im Besitz des Benutzers befindet und von dem Benutzer zum Zwecke der Reklamation zu der Vorrichtung gebracht wurde. Mit anderen Worten kann der Benutzer anhand der Beleginformation belegen, dass der Gegenstand zu der Vorrichtung gebracht wurde und somit zu den Geschäftsräumen des Händlers gebracht wurde, in denen der Gegenstand reklamiert bzw. zurückgegeben werden soll. Somit kann differenziert werden, ob der Gegenstand zu der Vorrichtung gebracht wurde und sonach von außerhalb der Geschäftsräume in diese gebracht wurde oder nicht. Das Personal oder der Betreiber kann anhand der Beleginformation feststellen, dass der Gegenstand zu der Vorrichtung gebracht wurde. Ferner ist es für den Benutzer möglich, zu belegen, dass der Gegenstand mitgebracht wurde. Dies erhöht den Komfort des Benutzers bei der Durchführung bzw. der Abwicklung einer Reklamation.

Demnach ist es vorteilhafterweise möglich, dass der Benutzer einen Gegenstand, der reklamiert werden soll, zu der Vorrichtung verbringt, die beispielsweise im Eingangsbereich des Ladens angeordnet ist, in dem der Gegenstand erworben wurde. Dort kann mittels der Identifizierungseinrichtung der von dem Benutzer bereitgestellte Gegenstand identifiziert werden, wobei eine Beleginformation erzeugt wird, die belegt, dass der Gegenstand zu der Vorrichtung gebracht wurde und sich dabei im Besitz des Benutzers befand.

Die Belegeinrichtung kann beispielsweise dazu ausgebildet sein, die Beleginformation zu erzeugen und in einem Datenspeicher abzulegen. Der Betreiber des Ladens bzw. der Betreiber der Vorrichtung kann anschließend bei Bedarf auf die Beleginformation zugreifen, unter anderem um zu überprüfen, ob der Gegenstand von dem Benutzer zu der Vorrichtung gebracht wurde bzw. ob der Gegenstand korrekt identifiziert wurde. Mit anderen Worten kann die Identifizierungsinformation und/oder die Beleginformation von dem Betreiber der Vorrichtung abgerufen werden. Alternativ oder zusätzlich ist es ebenso möglich, dass die Belegeinrichtung dazu ausgebildet ist, die Beleginformation, insbesondere an den Benutzer, auszugeben. Demzufolge kann dem Betreiber der Vorrichtung und/oder dem Benutzer, der den Gegenstand zu der Vorrichtung gebracht hat, die Beleginformation ausgegeben werden. Dies kann unter anderem durch eine visuelle und/oder akustische und/oder optische Ausgabe erfolgen, bevorzugt durch eine Darstellung auf einem Ausgabegerät, beispielsweise einem Bildschirm.

Dabei ist es bevorzugt möglich, dass die Belegeinrichtung dazu ausgebildet ist, die Beleginformation körperlich und/oder nicht körperlich (virtuell) auszugeben, insbesondere zu drucken und/oder elektronisch zu übermitteln. Wie zuvor beschrieben, ist es möglich, die Belegeinrichtung nicht körperlich auszugeben, beispielsweise durch die Ausgabe eines entsprechenden akustischen und/oder visuellen und/oder optischen Signals. Die Beleginformation kann ferner elektronisch übermittelt werden, beispielsweise in einen (externen) Datenspeicher abgelegt, insbesondere elektronisch übermittelt, zum Beispiel per E-Mail. Daneben ist es ebenso möglich, die Beleginformation körperlich auszugeben, beispielsweise einen Beleg auszudrucken für den Betreiber der Vorrichtung und/oder den Benutzer.

Nach einer weiteren bevorzugten Ausgestaltung der Vorrichtung kann eine Markiereinrichtung vorgesehen sein, dazu ausgebildet ist, einen Gegenstand für den mittels der Identifizierungseinrichtung eine Identifizierungsinformation erzeugt wurde, zu markieren. Dadurch kann der Gegenstand, der von dem Benutzer zu der Vorrichtung verbracht wurde, mittels der Markiereinrichtung markiert werden. Die Markierung kann dabei jedwede Form aufweisen, beispielsweise ein Barcode, QR-Code oder eine Markierung mit einer bestimmten Farbe bzw. einer bestimmten Form. Die Markierung auf dem Gegenstand erlaubt es, sicherzustellen, dass der Gegenstand der zurückgegeben bzw. reklamiert werden soll, auch dem Gegenstand entspricht, der mittels der Identifizierungseinrichtung identifiziert wurde. Die Markierung kann dabei auch als Beleginformation verstanden werden. Der Benutzer kann daher anhand der aufgebrachten Markierung nachweisen, dass der Gegenstand zu der Vorrichtung verbracht wurde.

Beispielsweise kann auch Personal des Betreibers der Vorrichtung die Markierung auf dem Gegenstand überprüfen und somit sicherstellen, dass es sich um einen Gegenstand handelt, der von dem Benutzer ("von außen") zu der Vorrichtung gebracht wurde. Dadurch ist es ferner möglich, den von dem Benutzer zu der Vorrichtung gebrachten Gegenstand von anderen Gegenständen innerhalb der Geschäftsräume des Betreibers der Vorrichtung zu unterscheiden.

Die erfindungsgemäße Vorrichtung weist wenigstens eine Schleuseneinrichtung auf, welche Schleuseneinrichtung wenigstens zwei Räume mittels eines Schleusenelements voneinander trennt, wobei die Schleuseneinrichtung dazu ausgebildet ist, einen Schließzustand des Schleusenelements in Abhängigkeit der Identifizierungsinformation zu verändern. Gemäß dieser Ausgestaltung ist es möglich, mittels der Schleuseneinrichtung das Innere der Geschäftsräume, beispielsweise eines Ladens in dem der Gegenstand gekauft wurde, von einem Außenbereich abzutrennen. Der Benutzer kann für die Reklamation des Gegenstands den Gegenstand zu der Vorrichtung verbringen, sodass in Abhängigkeit der Identifizierungsinformation das Schleusenelement geöffnet werden kann, um dem Benutzer Zutritt zu dem Geschäftsraum zu gewähren. Mit anderen Worten ist es möglich, dass, falls der Gegenstand positiv identifiziert wurde, der Schließzustand des Schleusenelements verändert wird, d.h. das Schleusenelement geöffnet wird, sodass der Benutzer den Gegenstand in die Geschäftsräume verbringen kann, um diesen dort zu reklamieren.

Nach einer weiteren bevorzugten Ausgestaltung der erfindungsgemäßen Vorrichtung kann vorgesehen sein, dass die Vorrichtung eine Aufnahmeeinrichtung aufweist, die dazu ausgebildet ist, den wenigstens einen Gegenstand aufzunehmen. Vorteilhafterweise ist es dabei nicht nötig, dass der Benutzer den Gegenstand in die Geschäftsräume verbringt, sondern der Gegenstand kann in die Aufnahmeeinrichtung eingelegt werden bzw. von der Aufnahmeeinrichtung aufgenommen werden. Die Aufnahmeeinrichtung der Vorrichtung ist dabei bevorzugt außerhalb der Geschäftsräume angeordnet, sodass eine Verwechslung mit dort zum Kauf angeboten Gegenständen vermieden bzw. verhindert wird. Der Benutzer kann den Gegenstand vielmehr an der Aufnahmeeinrichtung der Vorrichtung "abgeben" und muss den Gegenstand nicht in die Geschäftsräume mitführen. Stattdessen ist es beispielsweise möglich, dass dem Benutzer die Beleginformation ausgegeben wird, zum Beispiel in Form eines Bons, der angibt, dass der Gegenstand von dem Benutzer in der Aufnahmeeinrichtung hinterlegt wurde.

Die Aufnahmeeinrichtung weist dabei bevorzugt wenigstens ein Aufnahmeelement auf, das beispielsweise als verschließbares Fach ausgebildet ist, wobei der Gegenstand von dem Benutzer in das Aufnahmeelement einlegbar ist. Die Aufnahmeeinrichtung kann bevorzugt eine Vielzahl verschließbarer Fächer aufweisen, die insbesondere in gleicher und/oder unterschiedlicher Größe vorgehalten werden können. beispielsweise kann eine definierte Anzahl verschließbarer Fächer unterschiedlicher Größe vorgehalten werden, sodass unterschiedliche Gegenstände in diese eingelegt werden können. Dabei können die einzelnen Aufnahmeelemente im Grundzustand geöffnet oder verschlossen vorliegen, wobei bei positiver Identifizierung eines Gegenstands ein geeignetes Aufnahmeelement geöffnet werden kann und nach dem Einlegen des Gegenstands in das Aufnahmeelement verschlossen werden kann, sodass der Benutzer und andere Benutzer keinen Zugriff mehr auf den Gegenstand haben. Dabei kann beispielsweise in Abhängigkeit der Identifizierungsinformation festgestellt werden, welches Aufnahmeelement für den Gegenstand geeignet ist, wobei in der Identifizierungsinformation beispielsweise die Abmessungen des Gegenstands bzw. einer Umverpackung festgehalten werden können.

Bevorzugt weist die Aufnahmeeinrichtung eine Überprüfungseinrichtung auf, die dazu ausgebildet ist, wenigstens einen Parameter des Gegenstands zu überprüfen. Durch die Überprüfungseinrichtung kann sichergestellt werden, dass der Benutzer den positiv identifizierten Gegenstand bzw. den richtigen Gegenstand in das richtige Aufnahmeelement einlegt. Beispielsweise kann dadurch verhindert werden, dass zwar ein korrekter Gegenstand positiv identifiziert wird, der Benutzer jedoch einen falschen Gegenstand in das entsprechende Aufnahmeelement einlegt. Somit kann verhindert werden, dass, falls mehrere Gegenstände zurückgegeben bzw. reklamiert werden sollen, zwar die korrekten Gegenstände identifiziert wurden, diese jedoch in die falschen Aufnahmeelemente eingelegt werden. Des Weiteren kann verhindert werden, dass ein falscher Gegenstand in das Aufnahmeelement eingelegt wird oder überhaupt kein Gegenstand in das Aufnahmeelement eingelegt wird.

Die Überprüfungseinrichtung ist besonders bevorzugt dazu ausgebildet, die Masse des Gegenstands und/oder die Vollständigkeit des Gegenstands und/oder die Echtheit des Gegenstands und/oder die Funktion des Gegenstands und/oder eine Verpackung des Gegenstands zu überprüfen. Mit anderen Worten kann die Überprüfungseinrichtung diverse Parameter des Gegenstands überprüfen, um sicherzustellen, dass der richtige Gegenstand vollständig bzw. unbeschädigt eingelegt wurde. Es ist ebenso möglich, den Gegenstand durch die Überprüfungseinrichtung auf Beschädigungen zu überprüfen, beispielsweise in dem die Funktion des Gegenstands überprüft wird. Dabei kann, beispielsweise im Falle einer Reklamation bereits festgestellt werden, welchen Defekt der Gegenstand aufweist.

Des Weiteren kann festgestellt werden, ob eine Verpackung des Gegenstands intakt ist, oder ob Beschädigungen der Verpackung des Gegenstands vorliegen. Daneben ist es auch möglich, zu überprüfen, ob die Echtheit des Gegenstands gegeben ist, bzw. ob der richtige Gegenstand eingelegt wurde. Des Weiteren kann die Vollständigkeit des Gegenstands überprüft werden, beispielsweise ob sämtliche Zubehörteile des Gegenstands enthalten sind. Die Überprüfungseinrichtung kann dabei entsprechende Sensoren aufweisen, wie beispielsweise eine Wiegeeinrichtung und/oder eine optische Überprüfungseinrichtung, beispielsweise eine Kamera und/oder eine Röntgeneinrichtung.

Die erfindungsgemäße Vorrichtung kann ferner dahingehend weitergebildet werden, dass die Vorrichtung wenigstens eine Versandeinrichtung aufweist, die dazu ausgebildet ist, einen identifizierten Gegenstand für den Versand bereitzustellen. Gemäß dieser Weiterbildung der Vorrichtung kann die Versandeinrichtung einen bereits mittels der Identifizierungseinrichtung identifizierten Gegenstand für den Versand bereitstellen. beispielsweise kann der Gegenstand dazu in eine Aufnahmeeinrichtung, wie zuvor beschrieben, eingelegt werden. Die Versandeinrichtung kann anschließend einem Versender, insbesondere einem Versanddienstleister, den Zugang zu dem Gegenstand gewähren, sodass der Versender den Gegenstand abholen und versenden kann. Die Versandeinrichtung kann ferner weitere optionale Schritte durchführen, beispielsweise kann die Versandeinrichtung den Gegenstand bzw. dessen Umverpackung entsprechend kennzeichnen, zum Beispiel mit einem Versandetikett, sodass der Gegenstand für den Versand vorbereitet ist.

Die Versandeinrichtung kann bevorzugt ferner dazu ausgebildet sein, einem dem wenigstens einen angenommenen Gegenstand zugeordneten Versender eine Abholinformation zu übermitteln. Die Abholinformation kann beispielsweise beinhalten, dass der Gegenstand der Versandeinrichtung übergeben wurde. Ferner kann die Abholinformation weitere Parameter des Gegenstands, beispielsweise Abmessungen, Gewicht und dergleichen beinhalten, sodass der Versender den Versand des Gegenstands vornehmen kann. Dabei ist es vorteilhafterweise ebenfalls nicht erforderlich, dass der Benutzer Geschäftsräume betritt, sondern es ist möglich, den Gegenstand ausschließlich an der Vorrichtung zurückzugeben bzw. zu reklamieren, wobei der Gegenstand beispielsweise in eine Aufnahmeeinrichtung eingelegt bzw. der Versandeinrichtung übergeben werden kann.

Nach einer weiteren bevorzugten Weiterbildung der erfindungsgemäßen Vorrichtung kann vorgesehen sein, dass die Vorrichtung wenigstens eine Vergütungseinrichtung aufweist, die dazu ausgebildet ist, wenigstens eine Vergütungsinformation zu erzeugen. Die Vergütungsinformation kann beispielsweise darin bestehen, dass dem Benutzer mitgeteilt wird, welchen Geldbetrag er aufgrund der Reklamation bzw. der Rückgabe des Gegenstands erhält. Die Vergütungsinformation kann ferner eine Veranlassung einer entsprechenden Zahlung an den Benutzer beinhalten. Selbstverständlich können sämtliche weiteren Posten, wie beispielsweise erforderliche Aufwendungen für den Versand des Gegenstands und dergleichen ebenfalls in die Vergütungsinformation mit einbezogen werden.

Die Vorrichtung kann ferner zur Abwicklung von Reklamationen von Gegenständen von wenigstens zwei Verkaufsplattformen ausgebildet sein. D.h., dass die Vorrichtung plattformunabhängig betrieben werden kann und diverse Gegenstände identifizieren kann, unabhängig davon, auf welcher Verkaufsplattform diese verkauft wurden. Sonach ist es möglich, dass eine einzelne Vorrichtung Gegenstände identifizieren und annehmen kann, die von unterschiedlichen Verkaufsplattformen bezogen wurden. Vorteilhafterweise muss der Benutzer folglich sämtliche Gegenstände die zurückgegeben/reklamiert werden sollen, nur zu einer einzelnen Vorrichtung verbringen. Die Identifizierungseinrichtung der Vorrichtung ist dabei dazu ausgebildet, zu identifizieren um welche Gegenstände es sich handelt und von welcher Verkaufsplattform diese bezogen wurden, sodass die entsprechenden Versandinformation bzw. Vergütungsinformationen erzeugt werden können.

Die Vorrichtung ist besonders bevorzugt im Bereich wenigstens einer Großhandelseinrichtung oder einer Einzelhandelseinrichtung oder freistehend angeordnet. Wie zuvor beschrieben, können mittels der Vorrichtung Gegenstände für die Reklamation bzw. den Umtausch abgewickelt werden. Dabei ist es möglich, dass die Vorrichtung freisteht, beispielsweise um für die Abwicklung von Reklamationen von mehreren Verkaufsplattformen bzw. mehreren Handelseinrichtungen vorgesehen zu sein. Es ist ebenso möglich, dass die Vorrichtung einer bestimmten Handelseinrichtung, beispielsweise einer Großhandelseinrichtung oder einer Einzelhandelseinrichtung zugeordnet ist und in deren Bereich angeordnet ist. Dabei kann mittels der zuvor beschriebenen Schleuseneinrichtung sichergestellt werden, dass Benutzer bzw. Kunden nur identifizierte Gegenstände in die Handelseinrichtung mitführen und somit eine Verwechslung zwischen bereits gekauften und zum Kauf angebotenen Gegenständen verhindert wird.

Ferner betrifft die Erfindung ein Verfahren zum Betreiben einer Vorrichtung zur Abwicklung einer Reklamation wenigstens eines Gegenstands einer erfindungsgemäßen Vorrichtung, wie zuvor beschrieben, wobei ein Gegenstand mittels einer Identifizierungseinrichtung einer zuvor beschriebenen Vorrichtung identifiziert wird, wobei eine Belegeinrichtung in Abhängigkeit einer von der Identifizierungseinrichtung erzeugten Identifizierungsinformation eine Beleginformation erzeugt, die angibt, dass sich der wenigstens eine Gegenstand im Besitz eines Benutzers befindet und von dem Benutzer zum Zwecke einer Reklamation zu der Vorrichtung gebracht wurde.

Daneben betrifft die Erfindung ein Verfahren zur Abwicklung einer Reklamation wenigstens eines Gegenstands, wobei ein Gegenstand mittels einer Identifizierungseinrichtung einer erfindungsgemäßen Vorrichtung, wie zuvor beschrieben, identifiziert wird, wobei eine Belegeinrichtung in Abhängigkeit einer von der Identifizierungseinrichtung erzeugten Identifizierungsinformation eine Beleginformation erzeugt, die angibt, dass sich der wenigstens eine Gegenstand im Besitz eines Benutzers befindet und von dem Benutzer zum Zwecke einer Reklamation zu der Vorrichtung gebracht wurde.

Selbstverständlich sind sämtliche Vorteile, Einzelheiten und Merkmale, die in Bezug auf die erfindungsgemäße Vorrichtung beschrieben wurden, vollständig auf das erfindungsgemäße Verfahren zum Betreiben der Vorrichtung und auf das erfindungsgemäße Verfahren zur Abwicklung einer Reklamation übertragbar. Das Verfahren zum Betreiben einer Vorrichtung kann bevorzugt auf der erfindungsgemäßen Vorrichtung ausgeführt werden bzw. das Verfahren zur Abwicklung einer Reklamation nutzt bevorzugt die erfindungsgemäße Vorrichtung.

Die Erfindung wird nachfolgend anhand von Ausführungsbeispielen unter Bezugnahme auf die Zeichnungen näher erläutert. Die Zeichnungen sind schematische Darstellungen und zeigen:
- Fig. 1: eine erfindungsgemäße Vorrichtung in seitlicher Darstellung; und
- Fig. 2: die erfindungsgemäße Vorrichtung von Fig. 1 in Draufsicht.

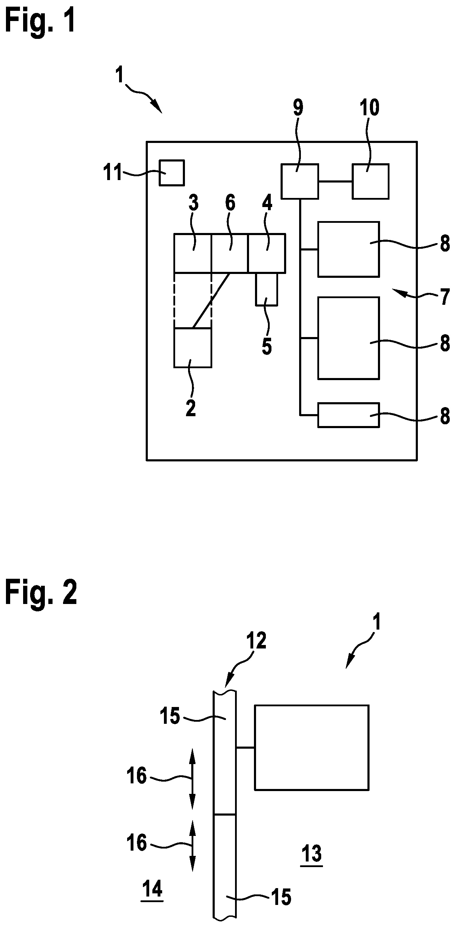

Fig. 1 zeigt eine Vorrichtung 1 für die Abwicklung einer Reklamation bzw. eines Umtauschs oder einer Rückgabe eines Gegenstands 2. Die Vorrichtung 1 weist eine Identifizierungseinrichtung 3 auf, die zur Identifizierung des von einem Benutzer (nicht dargestellt) bereitgestellten Gegenstands 2 ausgebildet ist. Die Identifizierungseinrichtung 3 erzeugt dabei eine den Gegenstand 2 betreffende Identifizierungsinformation, die beispielsweise übertragen oder in einem Datenspeicher hinterlegt werden kann.

Die Vorrichtung 1 weist ferner eine Belegeinrichtung 4 auf, die dazu ausgebildet ist, in Abhängigkeit der erzeugten Identifizierungsinformation eine Beleginformation zu erzeugen. Die Beleginformation gibt an, dass sich der Gegenstand 2 im Besitz des Benutzers befindet und von dem Benutzer zum Zwecke der Reklamation zu der Vorrichtung 1 gebracht wurde. Mit anderen Worten kann der Benutzer nachdem der Gegenstand 2 zur Vorrichtung gebracht und anschließend in die Geschäftsräume zur Reklamation mitgenommen wurde, mittels der Beleginformation belegen, dass der Gegenstand 2 von ihm zu der Vorrichtung 1 gebracht wurde und beispielsweise nicht ein in dem Geschäftsraum einer Handelseinrichtung, der die Vorrichtung 1 zugeordnet ist, zum Kauf angebotener Gegenstand ist. Demzufolge kann eine Verwechslung des bereits gekauften Gegenstands 2 mit zum Kauf angebotenen / ausgestellten Gegenständen (gleicher Art bzw. gleichen Typs) verhindert werden. Die Belegeinrichtung 4 ist beispielsweise dazu ausgebildet, die Beleginformation körperlich auszugeben, d.h. beispielsweise die Beleginformation auf einen Bon 5 auszudrucken. Der Benutzer kann den Bon 5 anschließend aufnehmen und mit sich führen, sodass der Benutzer belegen kann, dass der Gegenstand 2 bereits vor Betreten der Handelseinrichtung (des Ladens) zu der Vorrichtung 1 gebracht wurde und sonach bereits zuvor gekauft wurde.

Es ist ebenso möglich, dass die Belegeinrichtung 4 dazu ausgebildet ist, die Beleginformation nicht körperlich auszugeben, d.h. beispielsweise die Beleginformation zu übermitteln oder akustisch, haptisch oder visuell, insbesondere auf einem Bildschirm, auszugeben.

Fig. 1 zeigt ferner, dass die Vorrichtung 1 eine Markiereinrichtung 6 aufweist, die dazu ausgebildet ist, den Gegenstand 2 für den mittels der Identifizierungseinrichtung 3 eine Identifizierungsinformation erzeugt wurde, zu markieren. Die Markiereinrichtung 6 kann sonach dazu genutzt werden, einen positiv identifizierten Gegenstand 2 zu markieren. Dadurch kann weiter sichergestellt werden, dass beim Verbringen des Gegenstands 2 in eine Handelseinrichtung hinein, zum einen sichtbar ist, dass der Gegenstand 2 bereits an der Vorrichtung 1 identifiziert und registriert wurde und ferner kann sichergestellt werden, dass eine Verwechslung mit dort zum Kauf angebotenen identischen Gegenständen 2 verhindert wird, da sich diese aufgrund der Markierung unterscheiden. Die Markierung kann beliebig gewählt werden, beispielsweise das Aufbringen eines Symbols oder einer Kodierung, insbesondere eines Barcodes, QR-Codes oder dergleichen. Selbstverständlich ist es ebenso möglich, die Markierung anderweitig vorzunehmen, beispielsweise ein Beschreiben eines auslesbaren Datenspeichers, insbesondere eines RFID-Tags oder dergleichen.

Alternativ oder zusätzlich ist es ebenso möglich, dass die Vorrichtung 1 eine Aufnahmeeinrichtung 7 aufweist die dazu ausgebildet ist, den wenigstens einen Gegenstand 2 aufzunehmen. In dem in Fig. 1 dargestellten Ausführungsbeispiel weist die Aufnahmeeinrichtung 7 mehrere Aufnahmeelemente 8 auf, die lediglich beispielhaft unterschiedliche Größe aufweisen. Selbstverständlich können unterschiedliche Aufnahmeelemente 8 in beliebiger Anzahl und beliebiger Größe vorgehalten werden. Die Aufnahmeelemente 8 sind dabei verschließbar, sodass der Gegenstand 2 nach erfolgter Identifizierung mittels der Identifizierungseinrichtung 3 und gegebenenfalls Markierung mittels der Markierungseinrichtung 6 in eines der Aufnahmeelemente 8 eingelegt werden kann und das Aufnahmeelement 8 anschließend verschlossen werden kann. Die Aufnahmeelemente 8 sind beispielsweise als verschließbare Fächer ausgebildet.

Die Vorrichtung 1 weist ferner eine Überprüfungseinrichtung 9 auf. Diese ist in diesem Ausführungsbeispiel (optional) der Aufnahmeeinrichtung 7 zugeordnet bzw. steht mit dieser in Verbindung. Selbstverständlich ist es ebenso möglich, die Überprüfungseinrichtung 9 eigenständig auszubilden, sodass keine Zusammenwirkung mit der Aufnahmeeinrichtung 7 vorliegt. Insbesondere kann eine Überprüfungseinrichtung 9 auch bei der Vorrichtung 1 vorgesehen sein, ohne dass die Vorrichtung 1 eine Aufnahmeeinrichtung 7 aufweist. Die Überprüfungseinrichtung 9 ist dazu ausgebildet, mindestens einen Parameter des Gegenstands 2 zu überprüfen. In diesem Ausführungsbeispiel ist die Überprüfungseinrichtung 9 dazu ausgebildet, die Masse des Gegenstands 2 mittels einer Wiegeeinrichtung (nicht dargestellt) sowie die Vollständigkeit des Gegenstands 2, die Echtheit des Gegenstands 2 und die Funktion des Gegenstands 2 sowie die Verpackung des Gegenstands 2 zu überprüfen. Die Ergebnisse der Überprüfung können ebenfalls körperlich und/oder nicht körperlich ausgegeben werden.

Zusätzlich weist die Vorrichtung 1 eine Versandeinrichtung 10 auf, die dazu ausgebildet ist, den identifizierten Gegenstand 2 für den Versand bereitzustellen. beispielsweise kann der Gegenstand 2, wie zuvor beschrieben, in eines der Aufnahmeelemente 8 eingelegt werden. Anschließend kann die Versandeinrichtung 10 den Gegenstand 2 für den Versand bereitstellen, d.h. eine entsprechende Abholinformation an einen Versender übermitteln, der den wenigstens einen in der Aufnahmeeinrichtung 7 aufgenommenen Gegenstand 2 abholt und versendet.

Die Vorrichtung 1 weist zusätzlich eine Vergütungseinrichtung 11 auf, die zur Erzeugung einer Vergütungsinformation ausgebildet ist. Die Vergütungsinformation kann beispielsweise umfassen, dass dem Benutzer, der den Gegenstand 2 zur Vorrichtung 1 verbracht hat, ein entsprechender Geldbetrag zu vergüten ist.

Fig. 2 zeigt die Vorrichtung 1 in einer Draufsicht, wobei die Vorrichtung 1 grundsätzlich sämtliche Einrichtungen aufweist, die bereits in Fig. 1 gezeigt sind. Der Fig. 2 kann entnommen werden, dass die Vorrichtung 1 mit einer Schleuseneinrichtung 12 verbunden ist, die zwei Räume 13, 14 mittels zweier Schleusenelemente 15, beispielsweise bewegbare Türen, trennt. Die Schleuseneinrichtung 12 ist dazu ausgebildet, den Schließzustand der Schleusenelemente 15 in Abhängigkeit der Identifizierungsinformation zu verändern. Mit anderen Worten, kann die Vorrichtung 1 im Bereich einer Handelseinrichtung angeordnet sein, wobei die Schleuseneinrichtung 12 die beiden Räume 13, 14, also die Umgebung und das Innere des Geschäftsraums der Handelseinrichtung voneinander trennt.

In Abhängigkeit der Identifizierungsinformation, also abhängig davon, ob der Gegenstand 2 den der Benutzer zu der Vorrichtung 1 verbringt, positiv mittels der Identifizierungseinrichtung 3 identifiziert wurde, kann die Schleuseneinrichtung 12 den Schließzustand der Schleusenelemente 15 verändern. Wird sonach der Gegenstand 2 positiv identifiziert können die Schleusenelemente 15 geöffnet werden (dargestellt durch Pfeile 16), sodass der Benutzer Zutritt zu dem Raum 14 erhält. Dabei kann, wie zuvor beschrieben, der Gegenstand 2 vor dem Betreten des Raums 14 bzw. vor dem Öffnen der Schleusenelemente 15 mittels der Markierungseinrichtung 6 entsprechend markiert werden. Ersichtlich sind auch in diesem Ausführungsbeispiel die Aufnahmeeinrichtung 7 sowie die Versandeinrichtung 10 und die Überprüfungseinrichtung 9 lediglich optional.

Selbstverständlich können die erfindungsgemäßen Verfahren auf der Vorrichtung 1 durchgeführt werden.

### BEZUGSZEICHENLISTE

1 Vorrichtung
2 Gegenstand
3 Identifizierungseinrichtung
4 Belegeinrichtung
5 Bon
6 Markierungseinrichtung
7 Aufnahmeeinrichtung
8 Aufnahmeelement
9 Überprüfungseinrichtung
10 Versandeinrichtung
11 Vergütungseinrichtung
12 Schleuseneinrichtung
13 Raum
14 Raum
15 Schleusenelement
16 Pfeil

## Patentansprüche

1. Vorrichtung (1) für die Abwicklung einer Reklamation wenigstens eines Gegenstands (2), die eine zur Identifizierung eines von einem Benutzer bereitgestellten Gegenstands (2) ausgebildete Identifizierungseinrichtung (3) umfasst, wobei die Identifizierungseinrichtung (3) dazu ausgebildet ist, eine den Gegenstand (2), insbesondere einen positiv identifizierten Gegenstand (2), betreffende Identifizierungsinformation zu erzeugen, wobei eine Belegeinrichtung (4) dazu ausgebildet ist, in Abhängigkeit der Identifizierungsinformation eine Beleginformation zu erzeugen, die angibt, dass sich der wenigstens eine Gegenstand (2) im Besitz des Benutzers befindet und von dem Benutzer zum Zwecke einer Reklamation zu der Vorrichtung (1) gebracht wurde, **dadurch gekennzeichnet, dass** die Vorrichtung (1) wenigstens eine Schleuseneinrichtung (12) aufweist, welche Schleuseneinrichtung (12) wenigstens zwei Räume (13, 14) mittels wenigstens eines Schleusenelements (15) voneinander trennt, wobei die Schleuseneinrichtung (12) dazu ausgebildet ist, einen Schließzustand des Schleusenelements (15) in Abhängigkeit der Identifizierungsinformation zu verändern.

2. Vorrichtung nach Anspruch 1, **dadurch gekennzeichnet, dass** die Belegeinrichtung (4) dazu ausgebildet ist, die Beleginformation, insbesondere an den Benutzer, auszugeben.

3. Vorrichtung nach Anspruch 2, **dadurch gekennzeichnet, dass** die Belegeinrichtung (4) dazu ausgebildet ist, die Beleginformation körperlich und/oder nicht körperlich auszugeben, insbesondere zu drucken und/oder elektronisch zu übermitteln.

4. Vorrichtung nach einem der vorangehenden Ansprüche, **dadurch gekennzeichnet, dass** eine Markiereinrichtung (6) vorgesehen ist, die dazu ausgebildet ist, einen Gegenstand (2) für den mittels der Identifizierungseinrichtung (3) eine Identifizierungsinformation erzeugt wurde, zu markieren.

5. Vorrichtung nach einem der vorangehenden Ansprüche, **dadurch gekennzeichnet, dass** die Vorrichtung (1) eine Aufnahmeeinrichtung (7) aufweist, die dazu ausgebildet ist, den wenigstens einen Gegenstand (2) aufzunehmen.

6. Vorrichtung nach Anspruch 5, **dadurch gekennzeichnet, dass** die Aufnahmeeinrichtung (7) wenigstens ein Aufnahmeelement (8), insbesondere ein verschließbares Fach, aufweist, in welches der Gegenstand (2) von dem Benutzer einlegbar ist.

7. Vorrichtung nach Anspruch 5 oder 6, **dadurch gekennzeichnet, dass** die Vorrichtung (1), insbesondere die Aufnahmeeinrichtung (7) wenigstens eine Überprüfungseinrichtung (9) aufweist, die dazu ausgebildet ist, wenigstens einen Parameter des Gegenstands (2) zu überprüfen.

8. Vorrichtung nach Anspruch 7, **dadurch gekennzeichnet, dass** die Überprüfungseinrichtung (9) dazu ausgebildet ist, die Masse des Gegenstands (2) und/oder die Vollständigkeit des Gegenstands (2) und/oder die Echtheit des Gegenstands (2) und/oder die Funktion des Gegenstands (2) und/oder eine Verpackung des Gegenstands (2) zu überprüfen.

9. Vorrichtung nach einem der vorangehenden Ansprüche, **dadurch gekennzeichnet, dass** die Vorrichtung (1) wenigstens eine Versandeinrichtung (10) aufweist, die dazu ausgebildet ist, einen identifizierten Gegenstand (2) für den Versand bereitzustellen, wobei insbesondere die Versandeinrichtung (10) dazu ausgebildet ist, einem dem wenigstens einen angenommenen Gegenstand (2) zugeordneten Versender eine Abholinformation zu übermitteln.

10. Vorrichtung nach einem der vorangehenden Ansprüche, **dadurch gekennzeichnet, dass** die Vorrichtung (1) wenigstens eine Vergütungseinrichtung (11) aufweist, die dazu ausgebildet ist, wenigstens eine Vergütungsinformation zu erzeugen.

11. Vorrichtung nach einem der vorangehenden Ansprüche, **dadurch gekennzeichnet, dass** die Vorrichtung (1) zur Abwicklung einer Reklamation von Gegenständen von wenigstens zwei Verkaufsplattformen ausgebildet ist.

12. Vorrichtung nach einem der vorangehenden Ansprüche, **dadurch gekennzeichnet, dass** die Vorrichtung (1) im Bereich wenigstens einer Großhandelseinrichtung oder einer Einzelhandelseinrichtung oder freistehend angeordnet ist.

13. Verfahren zum Betreiben einer Vorrichtung (1) zur Abwicklung einer Reklamation wenigstens eines Gegenstands (2) nach einem der vorangehenden Ansprüche, wobei ein Gegenstand (2) mittels einer Identifizierungseinrichtung (3) einer Vorrichtung (1) nach einem der vorangehenden Ansprüche identifiziert wird, wobei eine Belegeinrichtung (4) in Abhängigkeit einer von der Identifizierungseinrichtung (3) erzeugten Identifizierungsinformation eine Beleginformation erzeugt, die angibt, dass sich der wenigstens eine Gegenstand (2) im Besitz eines Benutzers befindet und von dem Benutzer zum Zwecke einer Reklamation zu der Vorrichtung (1) gebracht wurde, **dadurch gekennzeichnet, dass** die Vorrichtung (1) wenigstens eine Schleuseneinrichtung (12) aufweist, welche Schleuseneinrichtung (12) wenigstens zwei Räume (13, 14) mittels wenigstens eines Schleusenelements (15) voneinander trennt, wobei die Schleuseneinrichtung (12) einen Schließzustand des Schleusenelements (15) in Abhängigkeit der Identifizierungsinformation verändert.

14. Verfahren zur Abwicklung einer Reklamation wenigstens eines Gegenstands (2), wobei ein Gegenstand (2) mittels einer Identifizierungseinrichtung (3) einer Vorrichtung (1) nach einem der Ansprüche 1 bis 12 identifiziert wird, wobei eine Belegeinrichtung (4) in Abhängigkeit einer von der Identifizierungseinrichtung (3) erzeugten Identifizierungsinformation eine Beleginformation erzeugt, die angibt, dass sich der wenigstens eine Gegenstand (2) im Besitz eines Benutzers befindet und von dem Benutzer zum Zwecke einer Reklamation zu der Vorrichtung (1) gebracht wurde, **dadurch gekennzeichnet, dass** die Vorrichtung (1) wenigstens eine Schleuseneinrichtung (12) aufweist, welche Schleuseneinrichtung (12) wenigstens zwei Räume (13, 14) mittels wenigstens eines Schleusenelements (15) voneinander trennt, wobei die Schleuseneinrichtung (12) einen Schließzustand des Schleusenelements (15) in Abhängigkeit der Identifizierungsinformation verändert.

## Claims

1. Device (1) for processing a complaint of at least one object (2) comprising identification information relating to the identification of an object provided by a user (2), wherein the identification device (3) is designed to generate identification information relating to the object (2), in particular a positively identified object (2), wherein a document device (4) is designed to generate document information depending on the identification information indicating that the at least one object (2) is in the possession of the user and has been brought by the user to the device (1) for the purpose of a complaint, **characterized in that** the device (1) has at least one lock device (12) which separates at least two spaces (12) by means of at least one lock element (15), wherein the lock device (12) is designed to alter a locking state of the lock element (15) depending on the identification information.

2. Device according to claim 1, **characterized in that** the document device (4) is designed to output the document information, in particular to the user.

3. Device according to claim 2, **characterized in that** the document device (4) is designed to physically and / or not physically output the document information, in particular to print and / or electronically transmit.

4. Device according to one of the preceding claims, **characterized in that** a marking means (6) is provided, which is designed to mark an object (2) for which an identification information has been generated by means of the identification means (3).

5. Device according to one of the preceding claims, **characterized in that** the device (1) has a receiving device (7), which is designed to receive the at least one object (2).

6. Device according to claim 5, **characterized in that** the receiving device (7) has at least one receiving element (8), in particular a lockable compartment, in which the object (2) can be inserted by the user.

7. Device according to claim 5 or 6, **characterized in that** the device (1), in particular the receiving device (7) has at least one checking device (9), which is designed to check at least one parameter of the object (2).

8. Device according to claim 7, **characterized in that** the checking device (9) is designed to check the mass of the object (2) and/or the completeness of the object (2) and/or the authenticity of the object (2) and/or the function of the object (2) and/or a packaging of the object (2).

9. Device according to one of the preceding claims, **characterized in that** the device (1) has at least one dispatch device (10) which is designed to provide an identified object (2) for dispatch, in particular the dispatch device (10) is designed to transmit a pick-up information to a sender assigned to the at least one assumed object (2).

10. Device according to one of the preceding claims, **characterized in that** the device (1) has at least one remuneration device (11) which is designed to generate at least one remuneration information.

11. Device according to one of the preceding claims, **characterized in that** the device (1) is designed for handling a complaint of objects from at least two sales platforms.

12. Device according to one of the preceding claims, **characterized in that** the device (1) is arranged in the region of at least one wholesale facility or a retail facility or freestanding.

13. Method for operating a device (1) for processing a complaint of at least one object (2) according to one of the preceding claims, wherein an object (2) is identified by means of an identification device (3) of a device (1) according to one of the preceding claims, wherein a document device (4) in dependence on an identification information generated by the identification device (3) generates a document information indicating that the at least one object (2) is in the possession of a user and has been brought by the user to the device (1) for the purpose of a complaint, **characterized in that** the device (1) has at least one lock device (12), which lock device (12) separates at least two rooms (13, 14) by means of at least one lock element (15), wherein the lock device (12) changes a closing state of the lock element (15) depending on the identification information.

14. Method for processing a complaint of at least one object (2), wherein an object (2) is identified by means of an identification device (3) of a device (1) according to one of claims 1 to 12, wherein a document device (4) in dependence on an identification information generated by the identification device (3) generates a document information indicating that the at least one object (2) is in the possession of a user and has been brought by the user to the device (1) for the purpose of a complaint, **characterized in that** the device (1) has at least one lock device (12), which lock device (12) separates at least two rooms (13, 14) by means of at least one lock element (15), wherein the lock device (12) changes a closing state of the lock element (15) depending on the identification information.

## Revendications

1. Dispositif (1) pour le traitement d'une réclamation portant sur au moins un objet (2) comprenant un dispositif d'identification (3) formé à l'identification d'un objet fourni par un utilisateur (2), le dispositif d'identification (3) étant formé pour produire une information d'identification concernant l'objet (2), en particulier un objet identifié positivement (2), le dispositif d'identification (4) étant formé pour produire, en fonction de l'information d'identification, un document d'identification indiquant qu'au moins un objet (2) est en la possession de l'utilisateur et a été amené par l'utilisateur au dispositif (1) aux fins d'une réclamation, **caractérisé en ce que** le dispositif (1) comporte au moins un dispositif d'écluse (12) séparant au moins deux locaux (13, 14) au moyen d'au moins un élément d'écluse (15), le dispositif d'écluse (12) étant formé pour modifier un état de fermeture de l'élément d'écluse (15) en fonction de l'information d'identification.

2. Dispositif selon la revendication 1, **caractérisé en ce que** le dispositif de réception (4) est conçu pour délivrer les informations de réception, en particulier à l'utilisateur.

3. Dispositif selon la revendication 2, **caractérisé en ce que** le dispositif de réception (4) est conçu pour transmettre physiquement et/ou non physiquement les informations de réception, en particulier pour imprimer et/ou transmettre électroniquement.

4. Dispositif selon l'une quelconque des revendications précédentes, **caractérisé en ce qu'**il prévoit un dispositif de marquage (6) conçu pour marquer un objet (2) pour lequel une information d'identification a été générée au moyen du dispositif d'identification (3).

5. Dispositif selon l'une quelconque des revendications précédentes, **caractérisé en ce que** le dispositif (1) comporte une installation d'accueil (7) conçue pour recevoir au moins un objet (2).

6. Dispositif selon la revendication 5, **caractérisé en ce que** l'installation d'accueil (7) comporte au moins un élément d'accueil (8), en particulier un compartiment verrouillable, dans lequel l'objet (2) peut être inséré par l'utilisateur.

7. Dispositif selon la revendication 5 ou 6, **caractérisé en ce que** le dispositif (1), en particulier l'installation d'accueil (7), comporte au moins un dispositif de vérification (9) conçu pour vérifier au moins un paramètre de l'objet (2).

8. Dispositif selon la revendication 7, **caractérisé en ce que** le dispositif de vérification (9) est conçu pour vérifier la masse de l'objet (2) et/ou l'exhaustivité de l'objet (2) et/ou l'authenticité de l'objet (2) et/ou la fonction de l'objet (2) et/ou un emballage de l'objet (2).

9. Dispositif selon l'une quelconque des revendications précédentes, **caractérisé en ce que** le dispositif (1) comporte au moins une installation d'expédition (10) formée pour mettre à disposition un objet identifié (2) en vue de l'expédition, en particulier l'installation d'expédition (10) formée pour transmettre une information de retrait à un expéditeur affecté à au moins un objet (2) accepté.

10. Dispositif selon l'une quelconque des revendications précédentes, **caractérisé en ce que** le dispositif (1) comporte au moins un dispositif de rémunération (11) conçu pour produire au moins une information de rémunération.

11. Dispositif selon l'une quelconque des revendications précédentes, **caractérisé en ce que** le dispositif (1) est formé pour traiter une réclamation d'objets provenant d'au moins deux plates-formes de vente.

12. Dispositif selon l'une quelconque des revendications précédentes, **caractérisé en ce que** le dispositif (1) est situé dans la zone d'au moins un établissement de vente en gros ou un établissement de vente au détail ou isolé.

13. Procédure d'exploitation d'un dispositif (1) pour traiter une réclamation d'au moins un objet (2) selon l'une des revendications précédentes, dans laquelle un objet (2) est identifié au moyen d'un dispositif d'identification (3) d'un dispositif (1) selon l'une des revendications précédentes, dans laquelle un dispositif d'identification (4) produit, en fonction d'une information d'identification générée par le dispositif d'identification (3), une information d'identification indiquant qu'au moins un objet (2) est en possession d'un utilisateur et a été amené par l'utilisateur au dispositif (1) aux fins d'une réclamation, **caractérisée en ce que** le dispositif (1) comporte au moins un dispositif d'écluse (12) séparant au moins deux locaux (13, 14) au moyen d'au moins un élément d'écluse (15), le dispositif d'écluse (12) modifiant un état de fermeture de l'élément d'écluse (15) en fonction de l'information d'identification.

14. Procédure de traitement d'une réclamation d'au moins un objet (2), dans laquelle un objet (2) est identifié au moyen d'un dispositif d'identification (3) d'un dispositif (1) selon l'une quelconque des revendications 1 à 12, dans laquelle un dispositif d'identification (4) produit, en fonction d'une information d'identification générée par le dispositif d'identification (3), une information d'identification indiquant qu'au moins un objet (2) est en possession d'un utilisateur et a été amené par l'utilisateur au dispositif (1) aux fins d'une réclamation, **caractérisée en ce que** le dispositif (1) comporte au moins un dispositif d'écluse (12) séparant le dispositif d'écluse (12) au moins deux locaux (13, 14) au moyen d'au moins un élément d'écluse (15), le dispositif d'écluse (12) modifiant un état de fermeture de l'élément d'écluse (15) en fonction de l'information d'identification.
